# FASCICULE DE BREVET EUROPEEN

(11) **EP 1 904 362 B1**
(45) Date de publication et mention de la délivrance du brevet: **05.01.2011**
(21) Numéro de dépôt: 06779026.1
(22) Date de dépôt: 07.07.2006
(51) Int. Cl.: B62D 27/02, B60G 21/05, B62D 65/12

(54) **PROCEDE D'ASSEMBLAGE D'UN ESSIEU DE VEHICULE AUTOMOBILE DU TYPE POURVU DE BRAS DE SUSPENSION ET D'UNE TRAVERSE MONTEE ENTRE LESDITS BRAS, ET ESSIEU CORRESPONDANT**
VERFAHREN ZUR MONTAGE EINER KRAFTFAHRZEUGACHSE MIT AUFHÄNGUNGSARMEN UND MONTIERTEM QUERTRÄGER ZWISCHEN DEN ARMEN UND ENTSPRECHENDE ACHSE
METHOD FOR ASSEMBLING A MOTOR VEHICLE AXLE OF THE TYPE PROVIDED WITH SUSPENSION ARMS AND A CROSS-MEMBER MOUNTED BETWEEN SAID ARMS, AND CORRESPONDING AXLE

(30) Priorité: 15.07.2005 FR 0507561
(43) Date de publication de la demande: 02.04.2008
(73) Titulaire: RENAULT S.A.S., 92100 Boulogne Billancourt (FR)
(72) Inventeur: CRIQUI, Bernard, F-92150 Suresnes (FR); FAYS, Samuel, 75014 Paris (FR); VENEAU, Jean, F-72370 Ardenay sur Merize (FR)
(86) Numéro de dépôt international: PCT/FR2006/050687
(87) Numéro de publication internationale: WO 2007/010156

(56) Documents cités:
- EP-A- 1 036 680
- DE-A1- 3 447 036
- DE-A1- 19 929 057
- FR-A- 2 822 104
- GB-A- 2 330 104

## Description

La présente invention concerne un procédé d'assemblage d'essieu de véhicule automobile du type comprenant des bras de suspension portant des supports de roues, et une traverse montée entre lesdits bras de suspension.

Un essieu de véhicule automobile comporte généralement deux bras de suspension oscillants portant chacun une roue à l'une de leurs extrémités, et qui sont articulés à leur autre extrémité sur la carrosserie du véhicule. Des moyens élastiques amortisseurs prenant appui sur les bras de suspension soutiennent la carrosserie.

Dans le cas d'une suspension arrière de véhicule automobile, un essieu comprend, en outre, une barre transversale élastiquement déformable en torsion rigidement reliée par ses extrémités aux deux bras arrière de suspension.

L'assemblage de cette traverse avec les bras de suspension doit non seulement être particulièrement résistant pour transmettre de manière efficace les efforts subis par les roues arrière du véhicule à la carrosserie, mais également être réalisé de façon précise pour conserver l'épure de l'essieu lors de son débattement.

Généralement pour réaliser cet assemblage, on emmanche la traverse à l'intérieur d'alésages des bras de suspension, puis on soude ces deux éléments entre eux. Pour plus de détails, on peut se référer aux documents FR-A3-2 840 854, WO-A1-02/081239, US-A1-2002/0005622, DE-A1-199 28 537 et EP-A1-0 774 369.

De tels assemblages présentent l'inconvénient de ne pas supporter de contraintes induites élevées, rendant ainsi particulièrement difficile l'obtention d'essieu comprenant une traverse et des bras de suspension réalisés avec différents matériaux, notamment en vue de l'allègement de la masse totale du véhicule automobile.

On connaît, par le document EP-A2-0 861 744, un essieu de véhicule automobile comprenant des bras de suspension et une traverse déformable en torsion réalisés sous la forme de profilés de conception adaptée pour être assemblés uniquement par emboîtement.

Outre le fait que les bras de suspension et la traverse engendrent, de par leur conception, une fabrication particulièrement onéreuse, l'essieu peut présenter, dans le cas d'importantes vibrations, une sûreté de fonctionnement relativement faible.

On connaît également, par le document US-B1-6 389 697, un procédé d'assemblage de profilés dans lequel on monte un premier profilé en appui contre une surface radiale de butée d'un second profilé sur lequel est ménagée une rainure annulaire, puis par impulsions électromagnétiques, on déforme radialement le premier profilé de manière que son extrémité se loge à l'intérieur de ladite rainure et on soude les profilés entre eux.

Un tel procédé d'assemblage comprenant des étapes de formage et de soudure électromagnétiques présente l'inconvénient d'être énergiquement cher.

On connait aussi, par le document EP-A2-1036680, un procédé d'assemblage d'un essieu de véhicule comportant les étapes définies dans le préambule de la revendication 1. Ce procédé connu présente l'inconvénient d'un éventuel arrachement de la colle lors de l'introduction de l'extrémité de la traverse dans le logement du bras de suspension.

La présente invention a donc pour but de remédier à ces inconvénients.

A cet effet, l'invention a pour objet un procédé d'assemblage d'un essieu de véhicule automobile comprenant les caracteristiques définies dans la revendication 1. lesdits bras de suspension comprenant les étapes successives au cours desquelles on applique un élément adhésif sur au moins une portion de

Avec un tel procédé d'assemblage, il devient ainsi possible d'obtenir la fixation d'une traverse sur des bras de suspension de manière particulièrement efficace. En effet, la déformation radiale d'un des éléments de l'assemblage constitué par la traverse et les bras de suspension permet d'obtenir un frettage de l'élément adhésif assurant une bonne sûreté de fonctionnement de l'essieu.

En outre, le montage préalable avec jeu de la traverse à l'intérieur de l'alésage du bras de suspension permet de limiter sensiblement le risque d'endommagement de l'élément d'adhésif.

En d'autres termes, la provision d'un jeu entre l'élément adhésif et le bras de suspension combiné avec la sollicitation radiale dudit élément adhésif permet l'obtention d'un essieu particulièrement résistant et économique.

Par ailleurs, le procédé d'assemblage selon l'invention permet d'utiliser des bras de suspension et une traverse à l'état brut sans usinage spécifique, et d'obtenir des essieux constitués avec des matériaux différents de manière à alléger la masse totale de l'essieu.

Dans un mode de mise en oeuvre préféré du procédé, on déforme un desdits éléments par l'intermédiaire d'un générateur d'impulsions électromagnétiques.

Avantageusement, on déforme la traverse en direction du bras de suspension, et on maintient rigidement le bras de suspension.

De préférence, on applique l'élément adhésif sur une longueur sensiblement supérieure à la dimension transversale du bras de suspension.

On peut également appliquer l'élément adhésif sur une longueur sensiblement égale à deux fois le diamètre de l'alésage du bras de suspension.

Préférentiellement, on réalise lesdites étapes à chaque extrémité de la traverse.

Dans un mode de mise en oeuvre du procédé, l'élément adhésif comprend de la colle.

Le fait que l'alésage du bras de suspension est étagé permet d'accroître la sûreté d'assemblage de l'essieu, par exemple dans le cas d'une éventuelle défaillance de l'élément adhésif.

Avantageusement, la traverse est réalisée en métal amagnétique, notamment en acier, en aluminium, ou en titane. Les bras de suspension peuvent être réalisés en aluminium.

L'invention et ses avantages seront mieux compris à l'étude de la description d'un mode de réalisation nullement limitatif, et illustré par les dessins annexés, sur lesquels :
- la figure 1 est une vue schématique en perspective d'un essieu selon l'invention ; et
- les figures 2 et 3 sont des vues schématiques en coupe illustrant les principales étapes d'assemblage de l'essieu de la figure 1.

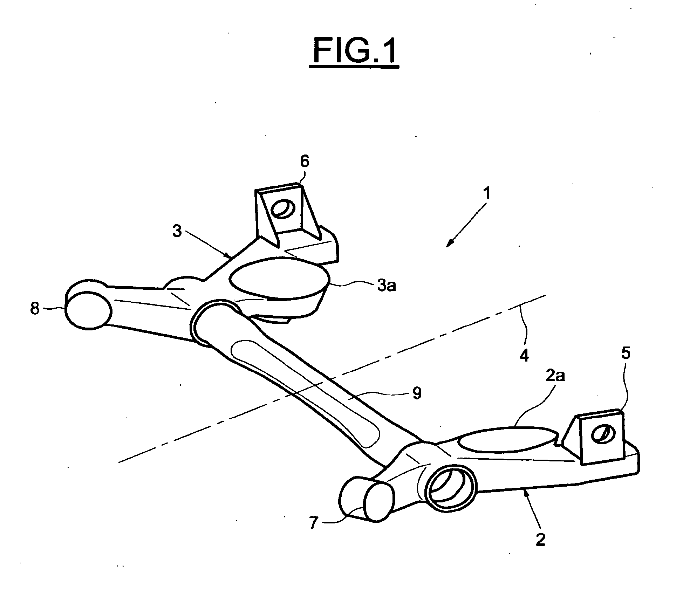

Sur la figure 1, on a représenté un essieu obtenu par le procédé d'assemblage selon l'invention et désigné par la référence numérique générale 1.

L'essieu 1 comprend deux bras de suspension 2, 3 s'étendant sensiblement le long de l'axe longitudinal médian 4 du véhicule. Chaque bras de suspension 2, 3 est relié respectivement par une extrémité 5, 6 dirigée vers l'arrière du véhicule à un support de roues (non représenté).

On entend ici par « arrière », la position dans laquelle se trouve l'essieu 1 lorsqu'il est monté sur un véhicule automobile. L'autre extrémité 7, 8 des bras de suspension 2 et 3, dirigée vers l'avant du véhicule, est articulée à la carrosserie du véhicule.

Au voisinage de l'extrémité 5, 6, chaque bras de suspension 2, 3 comprend une portion de support 2a, 3a plane montée du côté intérieur de l'essieu et destinée à recevoir un moyen élastique (non représenté), par exemple un ressort, apte à supporter la carrosserie du véhicule.

Chaque bras de suspension 2, 3 est ici réalisé en une seule pièce, par exemple par moulage d'aluminium. Une telle disposition permet ainsi de supprimer les opérations de montage des portions de support 2a, 3a et des extrémités 5 et 6 sur lesdits bras.

Une traverse 9 tubulaire est reliée par des portions d'extrémités aux deux bras de suspension 2, 3. La traverse 9 peut présenter, en section droite, différents types de profils. La traverse 9 est élastiquement déformable en torsion, et avantageusement réalisée en métal amagnétique, par exemple en acier austénitique, en aluminium haute résistance, ou encore en titane.

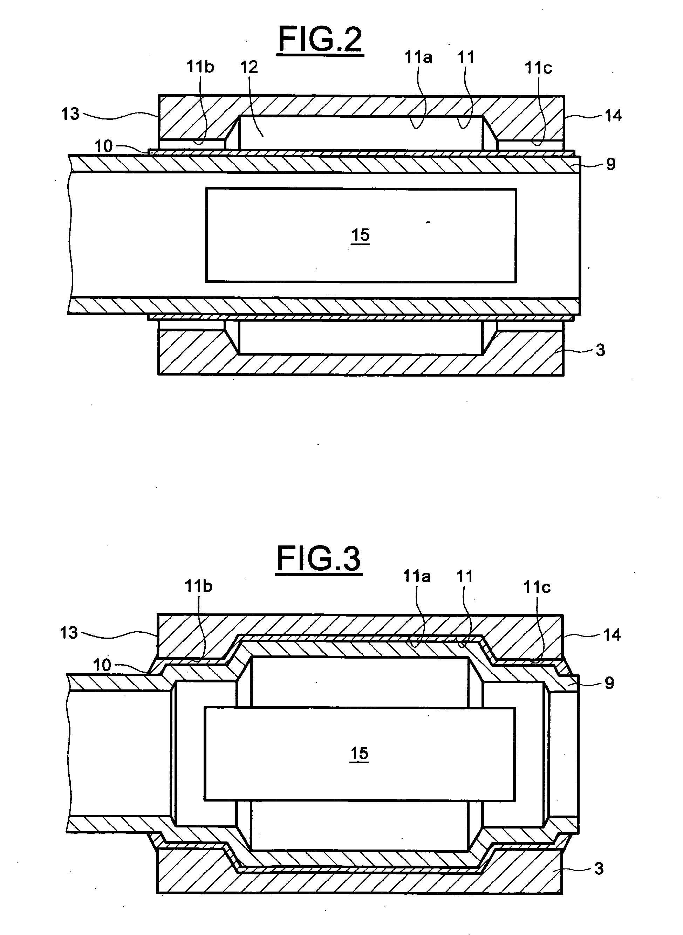

On va maintenant décrire, en référence aux figures 2 et 3, les principales étapes du procédé d'assemblage mis en oeuvre pour relier rigidement les bras de suspension 2, 3 à la traverse 9.

Dans un premier temps, on applique un élément adhésif 10 au niveau d'une portion d'extrémité de la traverse 9 et sur une longueur sensiblement supérieure à la dimension transversale du bras de suspension 3. L'élément adhésif 10 est ainsi en contact avec la surface cylindrique extérieure de la traverse 9. L'élément adhésif 10 peut par exemple être de la colle synthétique.

On monte ensuite la traverse 9 à l'intérieur d'un alésage 11 étagé du bras de suspension 3, de manière à laisser subsister un jeu radial 12 entre ledit alésage 11 et l'élément adhésif 10, en considérant l'axe de la traverse 9 (non représenté). Préalablement, les bras de suspension 2 et 3 ont été fixés rigidement sur un support (non représenté) prévu à cet effet.

L'alésage 11 comprend un premier étage 11a s'étendant sur la majeure partie de sa longueur et des second et troisième étages 11b, 11c prolongeant axialement de part et d'autre le premier étage 11a. Les second et troisième étages 11b, 11c présentent un diamètre réduit par rapport à celui du premier étage 11a. Le jeu 12 peut par exemple être de l'ordre d'un mm entre les second et troisième étages 11b, 11c et l'élément adhésif 10 et de cinq mm entre le premier étage 11a et ledit élément adhésif.

La traverse 9 est ici montée à l'intérieur de l'alésage 11, de manière que l'élément adhésif 10 soit en saillie axiale par rapport à des surfaces radiales frontales 13, 14 opposées du bras de suspension 3.

On introduit ensuite à l'intérieur de la traverse 9 un générateur 15 d'impulsions électromagnétiques. Le générateur 15 peut par exemple être une bobine. Le générateur 15 est ici situé sensiblement au niveau du premier étage 11a de l'alésage 11.

On alimente ensuite le générateur 15 de manière à créer un champ électromagnétique adapté pour permettre une déformation radiale de la portion d'extrémité de la traverse 9 sur laquelle est monté l'élément adhésif 10 en direction du bras de suspension 3.

A titre indicatif, on alimente le générateur 15 avec une puissance de 50 kJ pendant une durée d'environ 10 s, pour déformer une traverse 9 présentant un diamètre de 80 mm et une épaisseur de 2 mm pour une longueur d'insertion à l'intérieur du bras de suspension 3 de l'ordre de deux fois le diamètre de ladite traverse 9. Bien entendu, il est également envisageable de déformer mécaniquement la traverse 9.

Après l'opération de formage, la traverse 9 présente une portion d'extrémité étagée sensiblement en concordance de forme avec l'alésage 11 du bras de suspension 3. L'élément adhésif 10 est ainsi comprimé radialement entre ladite traverse 9 et le bras de suspension 3, ce qui assure une répartition uniforme dudit élément adhésif, notamment lorsqu'il comprend de la colle.

Le contact de l'élément adhésif 10 avec la traverse 9 et le bras de suspension 3 combiné avec la déformation radiale de ladite traverse 9 permet ainsi d'assurer son blocage axial à l'intérieur de l'alésage 11 de manière particulièrement efficace.

Il est également envisageable de prévoir des cannelures au niveau de l'alésage 11 pour accroître la sûreté du blocage tangentiel de la traverse 9 à l'intérieur de l'alésage 11.

Sur les figures 2 et 3, on a représenté uniquement le bras oscillant 3 de l'essieu, toutefois on comprend aisément qu'on reproduit à l'identique les étapes précédemment décrites pour réaliser la fixation de la traverse 9 par rapport au bras de suspension 2.

Le procédé d'assemblage d'un essieu de véhicule automobile selon l'invention, permet ainsi de pouvoir fixer rigidement une traverse avec des bras de suspension pouvant être réalisés dans des matériaux différents, notamment pour intégrer les fonctions de suspension au niveau desdits bras tout en réduisant la masse totale de l'essieu, et ce, de manière particulièrement simple et économique.

Bien entendu, il est également envisageable d'utiliser ce procédé pour réaliser l'assemblage d'autres pièces de véhicule automobile, par exemple pour réaliser la fixation de profilés destinés à former la structure de caisse du véhicule en montant par exemple à l'intérieur d'un premier profilé, un second profil sur lequel est préalablement appliqué un élément adhésif, en laissant subsister un jeu entre le premier profilé et l'élément adhésif, puis en déformant l'un des deux profilés pour obtenir un contact entre l'élément adhésif et le premier profilé.

## Revendications

1. Procédé d'assemblage d'un essieu de véhicule automobile du type pourvu de bras de suspension (2, 3) portant des supports de roues et d'une traverse (9) montée entre lesdits bras de suspension, dans lequel on applique un élément adhésif (10) sur au moins une portion de la traverse, puis on monte ladite portion à l'intérieur d'un alésage (11) d'un des bras de suspension, puis on déforme radialement un des éléments de l'assemblage constitué par la traverse (9) et les bras de suspension (2, 3) pour obtenir un contact entre l'élément adhésif (10) appliqué sur la portion de la traverse (9) et l'alésage (11) du bras de suspension, **caractérisé en ce que** la portion de la traverse (9) est montée à l'intérieur d'un alésage étage (11) du bras de suspension en laissant subsister un jeu radial entre les étages de l'alésage et l'élément adhésif, et **en ce qu'**un des éléments de l'assemblage est déformé de manière à ce que la portion de la traverse (9) présente une forme étagée en concordance avec l'alésage du bras de suspension, l'élément adhésif (10) étant comprimé radialement entre ladite portion de la traverse et l'alésage étagé.

2. Procédé selon la revendication 1, dans lequel on déforme un desdits éléments par l'intermédiaire d'un générateur d'impulsions électromagnétiques.

3. Procédé selon la revendication 1 ou 2, dans lequel on déforme la traverse en direction du bras de suspension, et on maintient rigidement le bras de suspension.

4. Procédé selon l'une quelconque des revendications précédentes, dans lequel on applique l'élément adhésif sur une longueur sensiblement supérieure à la dimension transversale du bras de suspension.

5. Procédé selon l'une quelconque des revendications précédentes, dans lequel on applique l'élément adhésif sur une longueur sensiblement égale à deux fois le diamètre de l'alésage du bras de suspension.

6. Procédé selon l'une quelconque des revendications précédentes, dans lequel on réalise lesdites étapes à chaque extrémité de la traverse.

7. Procédé selon l'une quelconque des revendications précédentes, dans lequel l'élément adhésif comprend de la colle.

## Claims

1. Method for assembling a motor vehicle axle of the type provided with suspension arms (2, 3) carrying wheel supports, and a cross-member (9) mounted between said suspension arms, in which an adhesive element (10) is applied to at least a portion of the cross-member, said portion is then inserted into a bore (11) in one of the suspension arms, and one of the elements of the assembly made up of the cross-member (9) and suspension arms (2, 3) is then deformed radially to obtain contact between the adhesive element (10) applied to the portion of the cross-member (9) and the bore (11) in the suspension arm; said method being **characterized in that** the portion of the cross-member (9) is inserted into a stepped bore (11) in the suspension arm, leaving a radial clearance between the steps of the bore and the adhesive element, and **in that** one of the elements of the assembly is deformed in such a way that the portion of the cross-member (9) exhibits a stepped shape that matches the bore in the suspension arm, the adhesive element (10) being compressed radially between said portion of the cross-member and the stepped bore.

2. Method according to Claim 1, in which one of said elements is deformed with the aid of an electromagnetic pulse generator.

3. Method according to Claim 1 or 2, in which the cross-member is deformed towards the suspension arm, and the suspension arm is held rigidly in place.

4. Method according to any one of the preceding claims, in which the adhesive element is applied along a length substantially greater than the transverse dimension of the suspension arm.

5. Method according to any one of the preceding claims, in which the adhesive element is applied along a length approximately equal to twice the diameter of the bore in the suspension arm.

6. Method according to any one of the preceding claims, in which said stages are implemented at each end of the cross-member.

7. Method according to any one of the preceding claims, in which the adhesive element comprises adhesive.

## Patentansprüche

1. Verfahren zum Zusammenbau einer Kraftfahrzeugachse von der Art, die mit Radhalter tragenden Lenkern (2, 3) und mit einem zwischen den Lenkern montierten Querträger (9) versehen ist, bei dem ein Klebeelement (10) auf mindestens einen Abschnitt des Querträgers aufgelegt wird, dann der Abschnitt im Inneren einer Bohrung (11) eines der Lenker montiert wird, dann eines der Elemente des aus dem Querträger (9) und den Lenkern (2, 3) bestehenden Zusammenbaus radial verformt wird, um einen Kontakt zwischen dem auf den Abschnitt des Querträgers (9) aufgelegten Klebeelement (10) und der Bohrung (11) des Lenkers zu erhalten, **dadurch gekennzeichnet, dass** der Abschnitt des Querträgers (9) innerhalb einer gestuften Bohrung (11) des Lenkers montiert wird, indem zwischen den Stufen der Bohrung und dem Klebeelement ein radiales Spiel gelassen wird, und dass eines der Elemente des Zusammenbaus so verformt wird, dass der Abschnitt des Querträgers (9) eine gestufte Form entsprechend der Bohrung des Lenkers aufweist, wobei das Klebeelement (10) radial zwischen dem Abschnitt des Querträgers und der gestuften Bohrung zusammengedrückt wird.

2. Verfahren nach Anspruch 1, bei dem eines der Elemente mit Hilfe eines elektromagnetischen Impulsgenerators verformt wird.

3. Verfahren nach Anspruch 1 oder 2, bei dem der Querträger in Richtung des Lenkers verformt und der Lenker steif gehalten wird.

4. Verfahren nach einem der vorhergehenden Ansprüche, bei dem das Klebeelement über eine Länge aufgelegt wird, die im Wesentlichen größer als die Querabmessung des Lenkers ist.

5. Verfahren nach einem der vorhergehenden Ansprüche, bei dem das Klebeelement über eine Länge aufgelegt wird, die im Wesentlichen gleich dem doppelten Durchmesser der Bohrung des Lenkers ist.

6. Verfahren nach einem der vorhergehenden Ansprüche, bei dem die Schritte an jedem Ende des Querträgers durchgeführt werden.

7. Verfahren nach einem der vorhergehenden Ansprüche, bei dem das Klebeelement Klebstoff enthält.
